# EUROPEAN PATENT APPLICATION

(11) **EP 1 136 930 A1**
(43) Date of publication of application: **26.09.2001**
(21) Application number: 01302426.0
(22) Date of filing: 15.03.2001
(51) Int. Cl.: G06F 17/60

(54) **Survey coupon-reading systems**

(30) Priority: 24.03.2000 US 534801
(71) Applicant: MARS, INCORPORATED, McLean Virginia 22101-3885 (US)
(72) Inventor: Jard, Philippe S, Downingtown, Pennsylvania 19335 (US); Young, Neil M, Downingtown, Pennsylvania 19335 (US)
(74) Representative: Burke, Steven David

(57) **Abstract**

Methods and apparatus for gathering marketing information are described. In particular, a monetary or merchandise reward, or the possibility of providing such a reward, is provided in exchange for completed or partially completed survey coupons. Such incentives increase consumer response to such survey coupons. Information obtained from the survey coupons can be used, for example, to obtain marketing or demographic data.

## Description

### Background of the Invention

The present invention relates generally to survey coupon-reading systems.

Manufacturers and vendors often seek to obtain information about the purchasers of their products. This information can be used, for example, to make informed decisions as to which products should be marketed in which locations, and to more effectively tailor the marketing of those products. Traditional methods for obtaining this information include mail-in surveys, in-store surveys, and telephone interviews. For various reasons, these methods may have low response rates, calling the reliability of the gathered information into question. It would be desirable, therefore, to develop methods for increasing the response rate and improving the reliability of the information obtained.

### Summary of the Invention

The invention is based on the idea that providing a monetary or merchandise reward, or the possibility of providing such a reward, in exchange for completed or partially completed survey coupons, can increase consumer response to such survey coupons. Information obtained from the survey coupons can be used, for example, to obtain marketing or demographic data.

In general. in one aspect, the invention features a method for obtaining marketing information. The method includes the steps of supplying survey coupons to a plurality of consumers, providing a device for accepting the coupons; and dispensing a reward (e.g., a soft drink, a candy bar, a monetary rebate. a value certificate, a credit, a free game, use of a machine, a lottery ticket, a horoscope, a fortune, or a discount certificate) if predetermined reward criteria are satisfied. Each of the survey coupons includes at least one question to be completed by a consumer.

The survey coupons can be, for example, supplied by mailings. inserts in periodicals, or from "take one" displays, bins, or dispensers.

The reward criteria can include, for example, (1) response to at least one of a minimum number of questions provided; or (2) response to at least two of a minimum number of questions provided, optionally with the requirement that the responses are consistent with each other.

The questions can be, for example, answered by marking with a pen or pencil. punching holes, application or removal of a sticker, or application or removal of a scratchable coating, at specific positions on the coupon.

The reward can, for example, be dispensed from the device, or from a vending machine electronically connected to the device.

The method can optionally further include capturing consumer data from the coupons and possibly selling the captured information to marketers.

The method can also include the further step of creating a consumer profile data record for each consumer in a responsive subset. The consumer profile data record can be, for example, individualized. The dispensed reward can then be, for example, tailored for each consumer in the responsive subset according to the individualized consumer profile data record and/or additional survey coupons can be provided to each consumer in the responsive subset according to the individualized consumer profile data record.

The consumer profile data record can be electronically transmitted to an external database. The consumer profile data record can be retrieved via an internet connection, an intranet connection, a telephonic connection, an Ethernet connection. a fiber optic connection, a modem, or an RF receiver; or extracted with a handheld or telemetry device, or by wireless communication.

The survey coupons can also be pre-encoded with social or demographic information.

In another aspect, the invention features a system for gathering marketing information. The system includes an automatic transaction machine configured to accept survey coupons, and a survey coupon having at least one inquiry for completion by a respondant. The machine can optionally include a validator configured to verify the authenticity of accepted survey coupons. The survey coupon can optionally include pre-encoded data (e.g., identification data, social information. demographic data, authentication data). The system can optionally include a reward dispensing means (e.g., a vending machine item dispenser electronically connected to the automatic transaction machine), a bill validator, a coin validator, a card reader. and/or a computer that processes data obtained from accepted survey coupons, in which case the system can further include transmission means (telephonic connection, an Ethernet connection, an internet connection, an intranet connection, an RF transmitter, a handheld device, a modem, a wireless transmitter, and a fiber optic connection) for transmitting the data processed by the computer to a remote device (e.g., a telemetry device, an RF receiver, a computer, or a telephone).

Completion of the survey coupon can entail, for example, marking the coupon with a pen or pencil, punching a hole in the coupon, or removing a masking sticker or scratchable coupon covering a portion of the survey coupon. The reward can be, for example, a cash rebate, merchandise, a coupon redeemable for a monetary refund or discount on merchandise, a chance of winning a cash rebate, merchandise, or a coupon, and/or a credit for use of a machine (e.g., a video game, a slot machine, or other machine).

An advantage of the invention is that the described techniques can yield immediate rewards to consumers, providing greater incentives to consumers to accurately respond than, for example, mail-in surveys.

Additional features and advantages of the invention will be readily apparent from the following description. drawings and claims.

### Brief Description of the Drawings

FIG. 1 is a front view of an implementation of a vending machine system adapted to accept survey coupons according to the invention.
FIG. 2 is cutaway side view of the vending machine system of FIG. 1.
FIG. 3 is an illustration of a survey coupon for use in a system according to the invention.
FIG. 4 is an illustration of a survey coupon for use in a system according to the invention.

### Detailed Description of the Invention

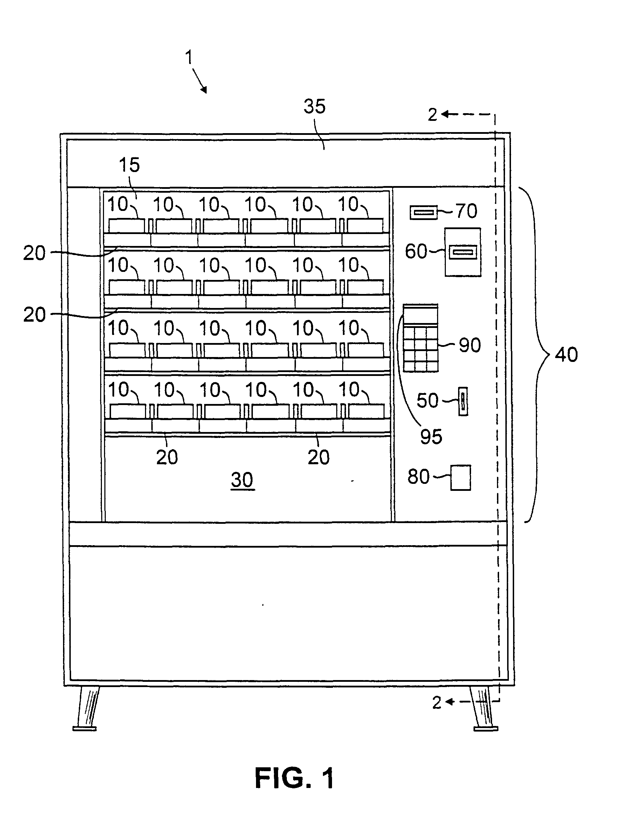

Examples of several modes of operation will now be discussed with reference to the drawings. In particular, survey coupons are supplied to consumers, for example, through random or targeted mailings (e.g., based on previously expressed preferences); as inserts in newspapers, magazines, or other periodicals; via "take one" displays or bins; dispensers (e.g., on merchandise shelves, at check-out counters, on or near a vending machine such as the vending machine of FIG. 1, or on bulletin boards); or from a machine (e.g., a vending machine) adapted to print or otherwise dispense survey coupons. The survey coupons can include one or more questions (e.g.. one, two, five, ten, or more questions) intended for the consumers to complete, and may optionally be pre-encoded with social or demographic data. The questions can be of any format, but are preferably short-answer or multiple-choice type questions. The subject matter of the questions can encompass any subject matter and most often includes subject matter for which statistical data (e.g., consumer preferences, demographic data) is sought.

The survey coupons can be programmed with information by filling in a specified portion of the survey coupons with a pen (e.g., a black or blue ink pen or a pen containing magnetic ink) or pencil, by punching holes in the coupons, or by removing a "scratchable" coating (such as that used on lottery "scratch" tickets) or a masking sticker. Suitable scratchable coatings or masking stickers can be made from (1) opaque materials that prevent light from passing through the survey coupons to a detector on the opposite side of the coupon from a light source. (2) reflective coatings that reflect light to a detector on the same side of the coupon as a light source, or (3) magnetic coatings that can be detected by magnetic sensors. The above data entry methods can be used in combination; thus, for example, information pre-programmed by the vendor or coupon manufacturer can be encoded by punching holes in the survey coupon, while consumer survey data might be filled in with a No. 2 pencil.

A responsive subset of consumers (e.g., one, several, many, or all of the consumers that received the survey coupons) can be expected to complete one or more of the questions and then return the survey coupon, particularly if given an incentive to do so. Exemplary incentives include the promise of a cash rebate, merchandise (e.g., a soft drink, a candy bar, a lottery ticket, a prediction of a fortune, or a horoscope), a coupon redeemable for a monetary refund or a discount on a product, or a chance of winning such a rebate, merchandise, or coupon. The survey coupon can also be redeemed for games, entertainment, internet access time, or the use of a machine (e.g., a video game, a computer, an amusement park ride). Rewards for filling in the survey may be based on the total number of questions answered. For example, a coupon worth ten cents could be dispensed for answering three out of five questions, while a coupon worth 25 cents might be dispensed for answering all five questions.

Referring to FIG.1, the vending machine 1 is capable of accepting a plurality of payment means in exchange for a product. In particular, the vending machine 1 can accept survey coupons, coins, banknotes or bills, credit or debit cards and electronic purse devices. The term "electronic purse device" used herein denotes a token or card possessing an electronic circuit, a magnetic strip or other data storing medium or circuitry, for retaining a credit value equivalent to money. It should also be understood that like components in the figures have been numbered the same throughout for ease of reference.

A variety of products 10 to be dispensed are stored in a display area 15 inaccessible to customers, such as behind a transparent glass panel. Each product 10 is retained by a product-delivery apparatus 20 that is selectively actuatable by a customer to dispense the product into a delivery area 30 from which the customer can retrieve the selected product.

The front panel 35 of the vending machine 1 has a control panel 40 having a coin slot 50, an entryway 60, and a card opening 70. The card opening 70 may accept a survey coupon, an electronic purse device, a credit card. or a debit card. The control panel 40 also contains a coin return 80 and an item selector such as a keypad 90. A display 95 may provide instructions and information to a customer.

A customer initiates a transaction by depositing coins or bills of particular denominations, into respective openings 50 or 60 along the control panel 40 in payment for an item. A customer may also insert a survey coupon, an electronic purse device, or a debit or credit card into entryway 60 or card opening 70 to initiate a transaction. Once sufficient payment has been deposited, the customer may select a product 10 to be dispensed using keypad 90. The corresponding product delivery apparatus 20 will then dispense the selected product 10 to the product delivery area 30 where it can be retrieved by the customer. Any change resulting from the transaction may be paid back to the customer through the coin return opening 80 or be credited by a card reader to an inserted electronic purse device. Details concerning money validation, card validation, establishing credit, dispensing products, paying out change, and other such vending mach functions are beyond the scope of this application and thus will not be discussed herein.

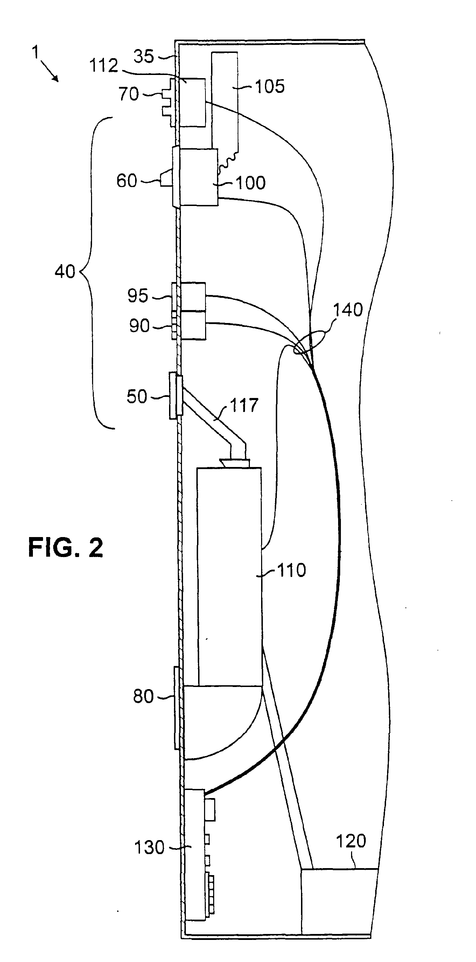

FIG. 2 is an enlarged, cutaway side view along dotted line 2-2 of FIG. 1 that illustrates the layout of typical internal components of the vending machine. In particular, connected to the rear of the control panel 40 are a bill validator 100, which is aligned with the entryway 60, a coin mechanism 110 connected to the coin slot 50 via coin passageway 117, and a card reader 112 aligned with the card opening 70. The coin mechanism 110 is also attached to the coin return 80, and to a coin box 120. The bill validator 100 is also attached to a stacker 105. A keypad 90 and display 95 are also connected to the control panel 40, and are electronically connected via lines 140 to a vending controller or computer 130. The card reader 112, bill validator 100. and coin validator 110 are also electronically connected to the vending controller 130. It will be understood by those of skill in the art that the connection of the payment devices shown in FIGS. 1 and 2 to the vending machine front panel 35. and the electronic connections to the vending controller 130 are merely illustrative. Many other configurations may be used.

"Redemption" of the survey coupon occurs when a consumer inserts the survey coupon into the survey coupon-accepting vending machine 1 via entryway 60. card opening 70, or another opening on the vending machine. The term "vending machine", as used herein, refers to any machine that can dispense products, money, receipts, coupons, certificates, discount cards, ID cards, or other goods, or provide services. Acceptance of the survey coupon into vending machine 1 may be facilitated by a transport motor activated by the insertion of a first edge of the survey coupon.

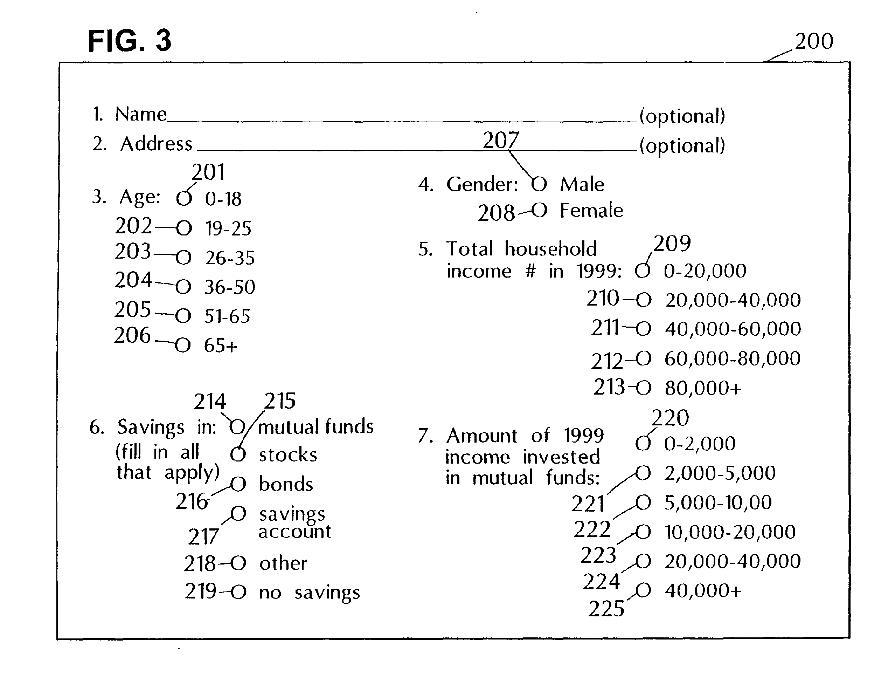

Vending machine 1 may optionally include a separate validator that authenticates the survey coupon and/or verifies that the survey coupon has been completed, either partially or entirely, or bill validator 100 or card reader 112 can be adapted to serve this function. If the survey coupon includes two or more questions, or one or more multiple-choice questions, the validator can also confirm that the questions have been consistently answered. With reference to the survey coupon 200 of FIG. 3, the validator may include optical sensors or the like to verify that questions 3-7 have been answered by detecting whether or not at least one circle has been filled in next to each question. That is, the validator verifies that one of circles 201-206 is filled in, one of circles 207 and 208 is filled in, at least one of circles 214-219 is filled in, and one of circles 220-225 is filled in. The validator can additionally confirm that the answers are consistent. For example. the validator may confirm that no more than one circle is filled in next to each of questions 3, 4, 5, and 7. Also, the validator may confirm that if circle 209 is filled in (i.e., $0-20000 total household income in 1999). then circle 225 is not also filled in (i.e., more than $40000 of 1999 income invested in mutual funds), since the amount of 1999 income invested in mutual funds cannot exceed total household income.

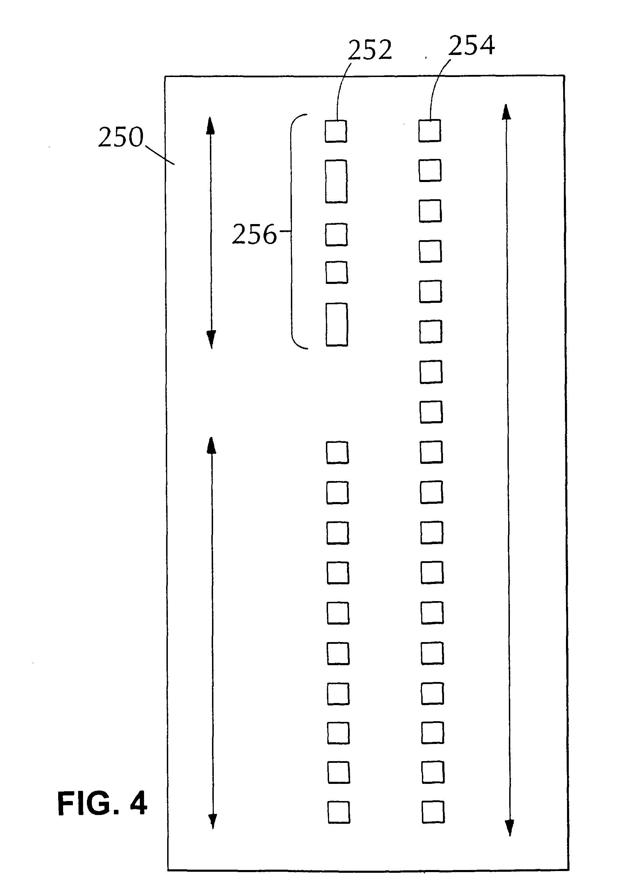

Another implementation of a survey coupon 250 is shown in FIG. 4. Survey coupon 250 is embedded or pre-programmed with machine-readable information that can, for example, define a "category." The category can be used, for example, to identify coupon type and/or encode a telephone or fax number. an internet or e-mail address, or other information. The information can be stored in vending machine 1 or in the optional validator. If the optical reading capability of the validator so permits. the number or address or other information can be printed in full on the coupon. Alternatively, the information can be read magnetically, electronically, or optically. As illustrated in FIG. 4, the information can be arranged, for example, in "tracks" 252 and 254. In such an arrangement, all or part of one or more tracks can include the pre-programmed information (i.e.. 256 in FIG. 4), while the rest of the tracks are reserved for survey data. Optionally, provision can be made for editing, altering, or correcting the pre-programmed information.

If the validator determines that the answers are inconsistent, or that not enough questions were answered to be eligible for a reward, then the vending machine may reject the survey coupon. Referring again to FIG. 1. the vending machine can reverse the transport motor to reject the survey coupon and to transport it back out through entryway 60, card opening 70, or other opening, and may additionally display an error message or other message on display 95. If the validator verifies that at least a minimum number of questions have been answered, and finds the answers to be consistent, then the vending machine can dispense a product 10 as described above. Alternatively, or in addition, vending machine 1 may be capable of dispensing a receipt, a coupon, a lottery ticket, a prediction of a fortune, a horoscope, or a discount card through card opening 70, or change via coin return 80. In some cases, the redeemed survey coupon may not be sufficient for exchange for a product 10. In such cases, the consumer may be prompted to insert coins into coin slot 50 or bills into the same or a different validator to make up the balance of the payment required to receive the product. Where the same validator is used to accept both coupons and bills, the coupon is preferably substantially the same size and shape as the bills. If excess payment is made, change can be dispensed via coin return 80.

In some cases, all of the products 10 may be identical. In other cases, the products 10 can vary and the product dispensed may depend on the answers provided by the consumer on the survey coupon or may be selected by the consumer by entering a selection on keypad 90.

The vending machine can store the redeemed and accepted survey coupons. for example, in a stacker 105, and the stored coupons can be periodically removed (e.g., when stacker 105 is full). Vending controller or computer 130 can optionally store (e.g., in an external server or internally using RAM or ROM or a hard drive or other storage media) and/or transmit (e.g., by telephone, ethernet, internet, intranet, RF transmission, wireless, or fiber optic connection) data obtained from the survey coupons. For example, individualized consumer profile data records containing records of data for each consumer may be transmitted to a central computer for analysis. The machine can also store and tabulate the data. which can, for example, be extracted by or transmitted to a handheld or telemetry device. The consumer profile data records can be used to target mailing of additional survey coupons to responsive consumers, can be used to compile data for further statistical analysis, or can be sold or downloaded to interested third parties.

The vending machine can also be adapted for use in a classroom (e.g., a kindergarten, elementary school, or high school classroom). In this embodiment, the survey coupons are in the form of quizzes, and products or credit towards products are awarded for achieving at least a predefined minimum number or percentage of correct responses to the quiz questions.

Other implementations are contemplated within the scope of the following claims.

## Claims

1. A method of gathering marketing information, comprising:
supplying survey coupons to a plurality of consumers. wherein each survey coupon includes at least one question to be completed by a consumer:
providing a device for accepting the coupons; and
dispensing a reward if predetermined reward criteria are satisfied.

2. The method of claim 1, wherein the reward is dispensed from the device.

3. The method of claim 1, wherein the reward is dispensed from a vending machine electronically connected to the device.

4. The method of claim 1. further comprising capturing consumer data from the coupons.

5. The method of claim 4, further comprising selling the captured consumer data to marketers.

6. The method of claim 1, wherein the reward is at least one of a soft drink, a candy bar, a monetary rebate, a value certificate, a credit, a free game, use of a machine. a lottery ticket, a horoscope, a fortune, and a discount certificate.

7. The method of claim 1, wherein the predetermined reward criteria include response to at least one of a minimum number of questions provided.

8. The method of claim 1, wherein the predetermined reward criteria include response to at least two of a minimum number of questions provided, and the responses being consistent with each other.

9. The method of claim 7, wherein the questions are answered by marking with a pen or pencil, punching holes, application or removal of a sticker, or application or removal of a scratchable coating, at specific positions on the coupon.

10. The method of claim 1. wherein survey coupons are supplied by at least one of mailings, inserts in periodicals, and "take one" displays, bins, or dispensers.

11. The method of claim 1, further comprising creating a consumer profile data record for each consumer in a responsive subset.

12. The method of claim 11, wherein the consumer profile data record is individualized.

13. The method of claim 12, wherein a dispensed reward is tailored for each consumer in the responsive subset according to the individualized consumer profile data record.

14. The method of claim 12, wherein additional survey coupons are provided to each consumer in the responsive subset according to the individualized consumer profile data record.

15. The method of claim 11, further comprising electronically transmitting the consumer profile data record to an external database.

16. The method of claim 11, wherein the consumer profile data record can be retrieved via an internet connection, an intranet connection, a telephonic connection. an Ethernet connection, a fiber optic connection, a modem, or an RF receiver.

17. The method of claim 11, further comprising extracting the consumer profile data record with a handheld or telemetry device.

18. The method of claim 11, further comprising extracting the consumer profile data record by wireless communication.

19. The method of claim 1, wherein the survey coupons are pre-encoded with social or demographic information.

20. A system for gathering marketing information, comprising:
an automatic transaction machine configured to accept survey coupons;
a survey coupon comprising at least one inquiry for completion by a respondant.

21. The system of claim 20, wherein the machine further comprises a validator configured to verify the authenticity of accepted survey coupons.

22. The system of claim 20. further comprising a reward dispensing means.

23. The system of claim 22. wherein the reward dispensing means is a vending machine item dispenser electronically connected to the automatic transaction machine.

24. The system of claim 20, wherein the survey coupon further comprises pre-encoded data.

25. The system of claim 20, further comprising at least one of a bill validator, a coin validator, and a card reader.

26. The system of claim 20, wherein completion of the survey coupon comprises marking the coupon with a pen or pencil, punching a hole in the coupon, or removing a masking sticker or scratchable coupon covering a portion of the survey coupon.

27. The system of claim 22, wherein the reward is at least one of a cash rebate, merchandise, a coupon redeemable for a monetary refund or discount on merchandise, and a chance of winning a cash rebate, merchandise, or a coupon.

28. The system of claim 22. wherein the reward is a credit for use of a machine.

29. The system of claim 20, further comprising a computer that processes data obtained from accepted survey coupons.

30. The system of claim 29, further comprising transmission means for transmitting the data processed by the computer to a remote device.

31. The system of claim 30, wherein the transmission means is at least one of a telephonic connection, an Ethernet connection, an internet connection, an intranet comlection, an RF transmitter, a handheld device, a modem, a wireless transmitter. and a fiber optic connection.

32. The system of claim 30, wherein the remote device is at least one of a telemetry device, an RF receiver, a computer, and a telephone.
